# EUROPÄISCHE PATENTSCHRIFT

(11) **EP 3 174 940 B1**
(45) Veröffentlichungstag und Bekanntmachung des Hinweises auf die Patenterteilung: **06.02.2019**
(21) Anmeldenummer: 15738951.1
(22) Anmeldetag: 24.07.2015
(51) Int. Cl.: C09D 4/00, C08F 222/10, C09D 11/101, C09D 11/30

(54) **UV-HÄRTBARES BESCHICHTUNGSMITTEL MIT VERBESSERTER SONNENLICHTBESTÄNDIGKEIT**
ULTRAVIOLET-CURABLE COATING AGENT WITH IMPROVED SUNLIGHT RESISTANCE
AGENT DE REVÊTEMENT DURCISSANT AUX UV AYANT UNE RÉSISTANCE AMÉLIORÉE À LA LUMIÈRE DU SOLEIL

(30) Priorität: 30.07.2014 EP 14179171
(43) Veröffentlichungstag der Anmeldung: 07.06.2017
(73) Patentinhaber: TIGER Coatings GmbH & Co. KG, 4600 Wels (AT)
(72) Erfinder: HOLZINGER, Dieter, A-4600 Wels (AT)
(74) Vertreter: Sonn & Partner Patentanwälte
(86) Internationale Anmeldenummer: PCT/EP2015/066971
(87) Internationale Veröffentlichungsnummer: WO 2016/016112

(56) Entgegenhaltungen:
- US-A1- 2011 183 081

## Beschreibung

Heutzutage werden die unterschiedlichsten Beschichtungssysteme im Außen- bzw. Fassadenbereich eingesetzt. Viele dieser Beschichtungssysteme haben den Einsatz von unterschiedlichsten UV-Absorbern gemein, um die Zersetzung der Polymermatrix bzw. den Abbau der verwendeten organischen Pigmente zu reduzieren. Falls UV-Absorber und Radikalfänger nicht eingesetzt werden, induziert die eintreffende UV-Strahlung Radikalbildung und Oxidation, welche zu einem Abbau der Polymerketten und zu einem Verblassen der eingesetzten Pigmente führt. Diese UV-Absorber limitieren jedoch erheblich die möglichen Härtungsmechanismen bzw. das Handling der Beschichtungssysteme oder wirken sich limitierend auf die Farbgebung aus. Der Einsatz von UV-Absorbern ist in klassischen, UV-härtenden System nicht möglich, da man bei der UV-induzierten Polymerisation auf eine möglichst gute und vollständige Durchdringung der zu härtenden Schicht angewiesen ist. In der Schicht vorhandene UV-Absorber würden die zur Polymerisation notwendige UV-Strahlung absorbieren, was in mangelnder Durchhärtung resultiert.

UV-härtende Inkjet-Tinten werden heutzutage primär für kurzzeitige Anwendung im Außenbereich (z.B. Bedruckung von LKW-Planen) mit einer Verweilzeit von bis maximal 3-5 Jahren eingesetzt. Eine Strategie die Lebensdauer von mit UV-härtenden Inkjet-Tinten beschichteten Gegenständen zu verlängern, ist der Einsatz von Schutzlackierungen, die die gedruckte Schicht vor den schädlichen Einflüssen von UV-Strahlung und Feuchtigkeit schützt. Diese Vorgangsweise hat jedoch den Nachteil, dass zur Applikation der schützenden Deckschicht ein zusätzlicher Arbeitsgang notwendig ist.

Eine andere Möglichkeit stellt die Verbesserung der Bewitterungsbeständigkeit der UV-Stabilität der UV-härtenden Inkjet Tinten dar, wobei folgende Möglichkeiten bereits dokumentiert wurden.

### a) Einsatz von anorganischen Pigmenten:

Wie in JP2005248065A erläutert, können die heute üblichen organischen Pigmente durch anorganische Pigmente ersetzt werden, die eine deutlich höhere Lichtbeständigkeit aufweisen. Eine nachteilige Folge beim Einsatz anorganischer Pigmente besteht in einer deutlichen Reduktion des abbildbaren Farbraums. Des Weiteren absorbieren die anorganischen Pigmente deutlich mehr UV-Strahlung als die organischen Pigmente, was speziell bei der UV-Härtung dickerer Druckschichten zu Problemen in der Durchhärtung führt, was sich wiederum negativ auf die Bewitterungsstabilität der gedruckten Schicht auswirkt.

### b) Einsatz von "lebenden" Polymerisationsmechanismen wie anionischer oder kationischer Polymerisation

Wie in JP2008031316A beschrieben, lassen sich durch den Einsatz lebender Polymerisations-mechanismen trotz Anwesenheit von UV-Absorbern gute Ergebnisse bei der Durchhärtung dicker Schichten erzielen. Nachteilig wirkt sich bei Einsatz dieser Polymerisationtypen die Aggressivität der zu verwendenden Katalysatoren aus. Diese bestehen aus Supersäuren und führen zur Korrosion der Inkjet-Druckköpfe. Des Weiteren zeichnen sich Inkjet-Tinten, welche auf lebenden Polymerisationsmechanismen basieren, durch eine stark erhöhte Streulichtempfindlichkeit aus, was zu einer erhöhten Wahrscheinlichkeit einer vollständigen Polymerisation der Tinten in den Druckköpfen führt.

### c) Einsatz von organischen oder anorganischen UV-Absorbern

Wie in JP2003268026A beschrieben, können UV-Absorber bei klassischen UV-härtenden Inkjet Tinten nur in geringen Mengen eingesetzt werden, da eine Konkurrenzsituation zwischen der UV-Polymerisation und dem UV-Schutz der Schicht besteht. Während es für eine gute Durchhärtung der gedruckten Tintenschicht notwendig ist um die Durchdringung der Tintenschicht mit UV-Strahlung möglichst vollständig zu gewährleisten, soll für einen guten UV-Schutz die Tintenschicht möglichst nicht von UV-Strahlung durchdrungen werden. Der Einsatz von UV-Absorbern führt somit zu Problemen bei der Durchhärtung von gedruckten Schichten, was sich negativ auf die Bewitterungsstabilität der Schichten auswirken kann. Des Weiteren werden die UV-Absorber während der UV-Härtung verbraucht werden, wodurch der Langzeit Schutz beim Außeneinsatz nicht mehr gegeben ist. Der Kompromiss der in den Beispielen dieser Erfindung offenbart wird, ist die Limitierung der Konzentration des UV-Absorbers auf wenige Massen-%.

### d) Einsatz von Photoinitiatoren die im sichtbaren Licht absorbieren

Der in GB2348647A beschriebene Einsatz von Photoinitiatoren, die im sichtbaren Licht absorbieren, ermöglicht den Einsatz UV-Absorbern in UV-härtenden Tinten, da es zu keiner Überlappung der UV-Absorptionspektren der UV-Absorber mit den Photoinitiatoren kommt. Der Einsatz von im sichtbaren Licht absorbierenden Photoinitiatoren wirkt sich jedoch ausgesprochen negativ auf die Verarbeitbarkeit der Tinten aus, da diese ohne jegliche Einstrahlung von sichtbarem Licht hergestellt und prozessiert werden müssen.

Zusammengefasst besteht der Bedarf nach einer Beschichtung (z.B. einer Tinte), welche einerseits UV-härtbar und andererseits eine erhöhte Außenstabilität (insbesondere gegenüber Sonnenlicht) aufweist.

Aufgabe der vorliegenden Erfindung ist es, ein strahlungshärtbares, insbesondere UVhärtbares Beschichtungsmittel (wie z.B. Tinte, Flüssiglack und Pulverlack) mit einer erhöhten Außenbeständigkeit (UV-Lichtbeständigkeit) bereitzustellen, welche die zuvor genannten Nachteile nicht aufweist. Überraschenderweise hat sich gezeigt, dass strahlungshärtbare Beschichtungsmittel, vorzugsweise Tinten, die polymerisierbare, ungesättigte Verbindungen wie (Methyl)Acrylate, Vinylverbindungen oder dgl. in einem Konzentrationsbereich von 15-98 Gewichts-% enthalten, mit einen Zusatz von 5-35 Gewichts-%, bevorzugt 5-20 Gewichts-%, organischer UV-Absorber die oben erwähnten Nachteile nicht aufweisen, wenn die UV-Absorber dadurch gekennzeichnet sind, dass diese UV-Absorber in einem Wellenlängenbereich von <390 nm, bevorzugt <350 nm, ihren maximalen Absorptionsgrad aufweisen.

Das erfindungsgemäße strahlungshärtbare Beschichtungsmittel enthaltend polymerisierbare, ungesättigte Verbindungen wie (Methyl)Acrylate, Vinylverbindungen oder dgl. in einem Konzentrationsbereich von 15-98 Gewichts-%, mit einem Zusatz von 5-35 Gewichts-%, bevorzugt 5-20 Gewichts-%, organischer UV-Absorber, wobei der bzw. die UV-Absorber in einem Wellenlängenbereich von <390 nm, bevorzugt <350 nm, ihren maximalen Absorptionsgrad aufweisen und das Beschichtungsmittel optional weitere Komponenten in einer Menge des Restes auf 100 Gewichts-% enthält, ist gemäß einer Ausführungsform der vorliegenden Erfindung derart gekennzeichnet, dass der organische UV-Absorber radikalisch polymerisierbar ist. Wie nachfolgend und in den Beispielen angegeben, werden derartige UV-Absorber beispielsweise von der Firma Otsuka Chemical Co., Ltd. mit dem Produkt RUVA-93 angeboten.

Das erfindungsgemäße Beschichtungsmittel kann in beiden Fällen gegebenenfalls weiteren Komponenten, wie beispielsweise Photoinitator(en) und/oder Photosensitizer, Füllstoffe, Pigmente, Additive und anderen UV-Absorber in einem Gesamtkonzentrationsbereich von 0-80 Gewichts-% enthalten bzw. machen diese Komponenten gegebenenfalls den Rest auf 100 Gewichts-% aus. Besonders bevorzugt kann bei Einsatz von üblichen UV-Quellen mit einem Emissionsspektrum von >350 nm auf diese Weise die erfindungsgemäße Aufgabenstellung einer ausreichenden Aushärtung des erfindungsgemäßen Beschichtungsmittel zu einer Beschichtung bei gleichzeitig guter bis sehr guter UV-Lichtbeständigkeit gelöst werden. Diese Lichtquelle kann beispielsweise eine UV-LED-Lampe oder eine HG-UV-Lampe mit entsprechenden Filtern sein, welche den Emissionspeak bei >360 nm, bevorzugt >390 nm, aufweist.

Das erfindungsgemäße strahlungshärtbare Beschichtungsmittel umfasst polymerisierbare, ungesättigte Verbindungen, wie (Methyl)Acrylate, Vinylverbindungen oder dgl. in einem Konzentrationsbereich von 15 - 98 Gewichts-%. Darüber hinaus umfasst es 5 - 35 Gewichts-%, bevorzugt 5 - 20 Gewichts-%, eines UV-Absorbers, besonders bevorzugt eines organischen UV-Absorbers, welche Absorber dadurch gekennzeichnet sind, dass sie in einem Wellenlängenbereich von <390 nm, bevorzugt <350 nm, ihren maximalen Absorptionsgrad aufweisen. Weiters umfasst das erfindungsgemäße strahlungshärtbare Beschichtungsmittel gegebenenfalls Photosensitizer und/oder Photoinitiatoren, welche im Bereich von kleiner 420 nm und bevorzugt größer 350 nm ihr Absorptionsmaximum haben.

Optional können im erfindungsgemäßen strahlungshärtbaren Beschichtungsmittel weitere Komponenten, wie beispielsweise zusätzliche Photoinitator(en) und/oder Photosensitizer, Füller, Pigmente, Additive und andere UV-Absorber in einem Gesamtkonzentrationsbereich von 0 - 80 Gewichts-% enthalten sein.

Vorzugsweise beträgt im erfindungsgemäßen Beschichtungsmittel der Anteil an monofunktionellen polymerisierbaren Komponenten mindestens 50 Gewichts-%, bevorzugt mindestens 75 Gewichts-% aller polymerisierbaren Komponenten. Diese Beschichtungsmittel zeichnen sich durch eine gute Ausgewogenheit zwischen Härte und Flexibilität in der ausgehärteten Beschichtung aus.

Andere bevorzugte Ausführungsformen des Beschichtungsmittels sind dadurch gekennzeichnet, dass der Anteil an monofunktionellen polymerisierbaren Komponenten höchstens 25 Gewichts-%, aller polymerisierbaren Komponenten beträgt. Diese Ausführungsformen sind insbesondere für harte Beschichtungen geeignet.

Andere bevorzugte Ausführungsformen des Beschichtungsmittels sind dadurch gekennzeichnet,, dass der Anteil an monofunktionellen polymerisierbaren Komponenten mindestens 75 Gewichts-%, aller polymerisierbaren Komponenten beträgt. Diese Ausführungsformen sind insbesondere für flexible Beschichtungen geeignet.

Das erfindungsgemäße Beschichtungsmittel kann sowohl in flüssiger als auch fester, pulverförmiger Form vorliegen. Mögliche Ausführungsformen sind beispielsweise Flüssig- und Pulverlacke. In einer bevorzugten Ausführung wird dieses Beschichtungsmittel als Tinte, insbesondere als Tintenstrahltinte, ausgeführt.

Nachfolgend sind einige Beispiele möglicher Komponenten des erfindungsgemäßen Beschichtungsmittels aufgezeigt.

Die erfindungsgemäße Beschichtungsmittel kann sowohl direkt auf das zu beschichtende Substrat aufgetragen werden oder auf eine oder mehrere bereits auf das Substrat aufgetragenen Beschichtungen (sogenannte Primer). Diese Primer können beispielsweise die Anhaftung als auch den Korrosionsschutz verbessern. Auch kann das erfindungsgemäße Beschichtungsmittel nach Aufbringen auf das zu beschichtende Substrat vor und/oder nach der Aushärtung mit zusätzlichen Schichten zur Verbesserung der mechanischen, optischen oder anderer Eigenschaften beschichtet werden. Auch eine erhöhte Lichtstabilität kann dadurch erreicht werden.

### Polymerisierbare, ungesättigte Verbindungen:

Bei den Acryl- und Methacrylmonomeren als auch Vinylverbindungen sind im Rahmen der Erfindung mono- bis oligofunktionelle Verbindungen verwendbar. Die Vielfalt an verfügbaren Stoffen ist sehr groß, die nachsehende Auflistung stellt nur einen Ausschnitt daraus dar.

Beispiele für monofunktionelle (Meth-)Acrylsäureester sind: Laurylacrylat, Isodecylacrylat, Tridecylacrylat, Tetrahydrofurfurylacrylat (THFA), 2-(2-Ethoxyethoxy)ethylacrylat (EOEOEA), cyclisches Trimethylolpropanformalacrylat (CTFA), Isobornylacrylat (IBOA), C12-C14 Alkylmethacrylat, Tetrahydrofurfurylmethacrylat (THFMA), Polypropylenglykolmonomethacrylat und Isobornylmethacrylat. Bei den zu verwendenden difunktionellen (Meth-)Acrylsäureestern handelt es sich beispielsweise um ethoxyliertes Bisphenol A Diacrylat, 1,6-Hexandioldiacrylat (HDDA), Polyethylenglykol 200 Diacrylat (PEG200DA), Polyethylenglykol 400 Diacrylat (PEG400DA), Polyethylenglykol 600 Diacrylat (PEG600DA), Tetraethylenglykoldiacrylat (TTEGDA), Triethylenglykoldiacrylat (TEGDA), propoxyliertes Neopentylglykoldiacrylat, Esterdioldiacrylat, Tripropylenglykoldiacrylat (TPGDA, ethoxyliertes Bisphenol A Diacrylat, Dipropylenglykoldiacrylat (DPGDA), alkoxyliertes Hexandiol 1,6-Hexandiol Diacrylat, ethoxyliertes Bisphenol A Diacrylat, Triethylenglykoldimethacrylat (TIEGDMA), Ethylenglykoldimethacrylat (EGDMA), Tetraethylenglykoldimethacrylat (TTEGDMA), 1,4-Butandioldimethacrylat (BDDMA), Diethylenglykoldimethacrylat (DEGDMA), 1,6-Hexandioldimethacrylat (HDDMA), 1,3-Butylenglykoldimethacrylat (BGDMA), ethoxyliertes Bisphenol A Dimethacrylat und Tricyclodecandimethanoldimethacrylat. Verwendbare (Meth-) Acrylsäureester der Funktionalität 3 oder höher sind beispielsweise ethoxyliertes Trimethylolpropantriacrylat, Pentaerythritoltetraacrylat (PETTA), Trimethylolpropantriacrylat (TMPTA), Ditrimethylolpropantetraacrylat (DiTMPTTA), Tris(2-Hydroxyethyl)isocyanurattriacrylat, Dipentaerythritolpentaacrylat (DiPEPA), Dipentaerythritolhexaacrylat (DiPEHA), ethoxyliertes Trimethylolpropantriacrylat, Pentaerythritoltriacrylat, ethoxyliertes Trimethylolpropantriacrylat, propoxyliertes Trimethylolpropantriacrylat, ethoxyliertes Pentaerythritoltetraacrylat (PPTTA), ethoxyliertes Trimethylolpropantriacrylat und Trimethylolpropantrimethacrylat (TMPTMA). Beispiele für Vinylverbindungen sind N-Vinyl-pyrrolidone, N-Vinyl-caprolactam, N-Vinyl-imidazole, N-Vinyl-N-Methylacetamide, Ethylvinylether, n-Butylvinylether, iso-Butylvinylether, tert.-Butylvinylether, Cyclohexylvinylether, 2-Ethylhexylvinylether, Dodecylvinylether, Octadecylvinylether, 1,4-Butandioldivinylether, Diethylenglycoldivinylether, Triethylenglycoldivinylether, 1,4-Cyclohexandimethanoldivinylether, Hydroxybutylvinylether, 1,4-Cyclohexanedimethanolmonovinylether, 1,2,4-Trivinylcyclohexan, Vinylphosphonsäure und Vinylphosphonsäuredimethylester.

Neben den hier aufgelisteten Monomeren gibt es noch zahlreiche weitere mit ähnlichem Aufbau. Sie finden sich in den Produktübersichten zahlreicher Hersteller wie Sartomer, BASF oder Rahn, welche dem Fachmann geläufig sind.

Daneben können auch polymerisationsfähige Oligomere mitverwendet werden. Diese umfassen unter anderem Epoxyacrylate, aliphatische sowie aromatische Urethanacrylate, Polyesteracrylate sowie Acryloligomere.

Bei der Wahl der Monomeren und Oligomeren und ihres Mengenverhältnisses in der Formulierung ist insbesondere bei flüssigen Systemen auf die Viskosität Bedacht zu nehmen. Die Viskosität der erfindungsgemäßen Tinten liegt bei Verarbeitungstemperatur - üblicherweise ca. 15 bis 60°C - vorzugsweise im Bereich von 2 bis 20 mPa·s, besonders bevorzugt im Bereich von 6 bis 12 mPa·s. Es gilt, dass Komponenten mit niedriger Funktionalität tendenziell niedrigere, Komponenten mit hoher Funktionalität tendenziell höhere Viskosität der Tinte zur Folge haben.

Weitere Beispiele von aktuell im Markt erhältlichen polymerisierbaren bzw. vernetzbaren Molekülen sind in "KAKYOZAI HANDBOOK", editiert von Sinzo Yamashita (publiziert von TAISEISHA LTD. in 1981); "UV-EB KOKA GIJUTSU (GENRYO HEN)" editiert von RADOTECH KENKYUKAI, Seite 79 (publiziert von CMC in 1989); "POLYESTER JUSHI HANDBOOK" von Eiichiro Takiyama (publiziert von THE NIKKAN KYOGYO SHIMBUN, LTD. in 1988); zu finden.

Des Weiteren sind radikalisch polymerisierbare Verbindungen in den folgenden Patenten zu finden: JP 7159983, JP 731399 , JP 8224982 , JP 10863 , JP 9134011. Diese Komponenten können ebenfalls im erfindungsgemäßen Beschichtungsmittel eingesetzt werden.

Bevorzugt werden Mischungen aus mono-, di- und mehrfachfunktionellen Monomeren eingesetzt, um die Haftung, die Härtungsgeschwindigkeit und die chemische und mechanische Stabilität zu optimieren.

Besonders bevorzugt werden im erfindungsgemäßen Beschichtungsmittel Monomere eingesetzt, die über keine konjugierten Doppelbindungen bzw. aromatische Strukturen verfügen.

### Initiatoren:

Grundsätzlich können im erfindungsgemäßen Beschichtungsmittel alle Initiatoren eingesetzt werden.

Die erfindungsgemäß verwendeten Initiatoren absorbieren extern zugeführte Energie, zerfallen und generieren somit eine radikalische Species, welche die Polymerisation initiiert. Beispiele für Strahlung inkludieren Gamma-Strahlung, Beta-Strahlung, Elektronenstrahlung, UV-Strahlung, Sichtbares-Licht, und Infrarot-Strahlung. Im Rahmen der Photopolymerisation kann grundsätzlich jeder bekannt Photoinitiator eingesetzt werden.

Beispiele für Photoinitiatoren, die im erfindungsgemäßen Beschichtungsmittel bevorzugt eingesetzt werden können inkludieren (a) aromatische Ketone, (b) Acylphosphin-Verbindungen, (c) aromatische Onium-Salze, (d) organische Peroxide, (e) Thio-Verbindungen, (f) Hexaarylbiimidazol-Verbindungen, (g) Ketoxim-Ester-Verbindungen, (h) Borat-Verbindungen, (i) Azinium-Verbindungen, (j) Metallocen-Verbindungen, (k) aktive Ester-Verbindungen, (1) Halogenverbindungen, und (m) Alkylamin-Verbindungen.

Diese Initiatoren für radikalische Polymerisation können entweder alleine oder in Kombination von zwei oder mehreren Verbindungen eingesetzt werden. Bevorzugt werden im erfindungsgemäßen Beschichtungsmittel zwei oder mehrere Initiatoren eingesetzt, da so die Effektivität der Polymerisation verbessert wird.

Besonders bevorzugte Photoinitiatoren sind unter anderen jene aus den Klassen der Acylphosphinoxide und Acylphosphonate, gut geeignete Vertreter beispielsweise sind bis(2,4,6-Trimethylbenzoyl)-phenylphosphinoxid, bis(2,6-Dimethoxybenzoyl)-2,4,4-trimethyl-pentyl-phosphinoxid, daneben weiters 1-Hydroxy-cyclohexylphenylketon, 2-Methyl-1-[4-(methylthio)phenyl]-2-morpholinopropen-1-on und 2-Hydroxy-2-methyl-1-phenylpropan-1-on. Diese Verbindungen sind beispielsweise unter den Handelsbezeichnungen Speedcure (Lambson), Irgacure®, Lucerin® (BASF) oder Genocure (RAHN) erhältlich. Die bevorzugten Zugabemengen liegen im Bereich von 1 bis 13, besonders bevorzugt im Bereich von 2 bis 10 Gewichts-%, bezogen auf das Gesamtgewicht der Formulierung. Auch die Wahl des Photoinitiators hängt stark von Art und Menge des verwendeten Pigmentes ab; es ist vorteilhaft, wenn Pigment(e) und Photoinitiator(en) nicht bei denselben Wellenlängen absorbieren.

Zusätzlich können Synergisten zu einer weiteren Verbesserung der Effektivität der Polymerisation eingesetzt werden. Co-Initiatoren bzw. Thiol- und Amin-Synergisten können im erfindungsgemäßen Beschichtungsmittel verwendet werden, um die Härtungsrate zu verbessern. Beispiele hierfür sind Isopropylthioxanthon, Ethyl-4-(dimethylamino)benzoat und Dimethylaminoethylmethacrylat.

Ein Übersicht bzgl. gängiger Synergisten wird beispielsweise im Journal of Polymer Society von M. R, Sander et al., vol. 10, p. 3173, (1972), sowie in der JP 4420189 , JP 5182102, JP 52134692 , JP 59138205 , JP 6084305 , JP 6218537 und JP 6433104 gegeben. Spezifische Beispiele werden für die Substanzklassen der Triethanolamine, Ethyl p-dimethylaminobenzoate, p-Formyldimethylaniline und p-Methylthiodimethylaniline gegeben.

Besonders bevorzugt werden Photoinitiatoren der Klassen Thioxanthone und Phosphinoxide eingesetzt.

### UV-Absorber:

Zur Verbesserung der Bewitterungsstabilität werden typischerweise UVA-Absorber eingesetzt, wobei meist drei Klassen unterschieden werden, nämlich 2-Hydroxyphenylbenzophenone (BP), 2-(-2Hydroxyphenyl)-benzotriazole (BTZ) und 2-Hydroxyphenyl-s-triazine (HPT). Diese stellen jedoch keine wie auch immer geartete Limitierung dar. Alle UV-Absorber haben gemeinsam, dass sie in der Lage sind UVA-Strahlung zu absorbieren und in unschädliche Wärme umzuwandeln. Bekannte Hersteller sind beispielsweise die Firmen BASF und Lambson in Europa bzw. die Firma Everlight Chemical in Asien. Geeignete UV-Absorber sind beispielsweise unter den Handelsnamen Tinuvin® 109,1130, 171, 326, 328, 384-2, 99-2, 900, 928, 1577ED, 400, 405,460,477, 479, Carboprotect® bzw. Chimasorb®81,90 bzw. Eversorb® 71, 72, 72, 74, 75, 76, 77, 78, 79, 80, 81, 82, 234, 109, 89 bzw. Speedblock® 326, 328, 622, 770, 783, 791, 944,UV-0, UV-3, UV-6, UV-9, UV-92 erhältlich.

Neben frei in der Formulierung vorliegenden UV-Absorbern besteht bei den erfindungsgemäßen Beschichtungsmitteln auch noch die Möglichkeit, radikalisch polymerisierbare UV-Absorber in die Polymerketten einzubauen.

Ein Einbau in die Polymerkette ermöglicht deutlich höhere Konzentration an UV-Absorber(n) in der Formulierung, da ein solcher UV-Absorber nicht inert in der Formulierung vorliegt, sondern in die Kette einreagiert und somit den weiteren Polymerisationsvorgang nicht behindert. Dies führt zur Ausbildung eines ungestörten Netzwerkaufbaus und somit zu einem deutlich höheren Umsetzungsgrad der Polymerisation. Der geringere Restmonomergehalt äußert sich des Weiteren in einer geringeren Geruchsausbildung.

Durch den Einbau in die Polymerketten ist der UV-Absorber in der gehärteten Schicht deutlich besser fixiert und kann nicht mehr ausgewaschen werden. Dies verbessert die Performance des Gesamtsystems im Vergleich zum Einsatz von konventionellen UV-Absorbern bzgl. Bewitterungsstabilität.

Derartige UV-Absorber werden beispielsweise von der Firma Otsuka Chemical Co., Ltd. mit dem Produkt RUVA-93 angeboten. Ein weiterer Anbieter von solcherart polymerisierbaren UV-Absorbern ist beispielsweise die Firma Polyscience, die das Produkt o-Methylallyl Tinuvin P (oMTP) kommerziell vertreibt. Abgesehen davon können prinzipiell alle UV-Absorber eingesetzt werden, solange sie die Vorgaben des maximalen Absorptionsgrades in einem Wellenlängenbereich von <390 nm, bevorzugt <350 nm, aufweisen und gleichzeitig zusammen mit den erfindungsgemäß eingesetzten Monomeren und/oder Oligomeren radikalisch polymerisierbar sind, um in die gebildete Polymerkette eingebaut zu werden. Als weitere Beispiele für radikalisch polymerisierbare UV-Absorber sind insbesondere folgende, beispielsweise aus der WO 2006/119304 A1 bekannte Verbindunge zu nennen: 2-[3'-t-Butyl-5'-methacryloyloxy-(2'-(2"-ethylhexyloxy)-carbonyl)ethyl-2'-hydroxyphenyl]-5-chloro-2H-benzotriazol, 5-Trifluoromethyl-2-[2'-hydroxy-3'-a-cumyl-5'-(methacryloyloxy-α-cumyl)phenyl]benzotriazol, 2-[3'-t-Butyl-(5'-methacryloyloxy-t-butyl)-2'-hydroxyphenyl]benzotriazol, 2-(5'-Methacryloyl-oxy-t-butylphenyl)benzotriazol, 2-(2'-Hydroxy-5'-t-methacryloyloxyoctylphenyl)benzotriazol, 2-(3'-Dodecyl-2'-hydroxy-5'-methacryloyloxymethylphenyl)benzotriazol, 2-(5'-Methacryloyloxymethyl-2'-hydroxyphenyl)benzotriazol, 5-Chloro-2-(3'-t-butyl-2'-hydroxy-5'-methacryloyloxymethylphenyl)benzotriazol, 2-(3'-sec-Butyl-5'-methacryloyloxy-t-butyl-2'-hydroxyphenyl)benzotriazol, 2-(3'-t-Amyl-5'-methacryloyloxy-t-amyl-2'-hydroxyphenyl)benzotriazol, 5-Trifluoromethyl-2-(2'-hydroxy-3't-butyl-5'-(methacryloyloxy-t-butyl)phenyl]benzotriazol, 2-(3'-α-Cumyl-5'-methacryloyloxy-2'-hydroxyphenyl)benzotriazol, 5-Fluoro-2-[2'-hydroxy-3'-α-cumyl-5'-(methacryloyloxy-α-cumyl)-phenyl]benzotriazol, 2-[2'-Hydroxy-3'-t-octyl-5'-methacryloyloxy-α-cumylphenyl]benzotriazole, 2-(3'-t-Butyl-2'-hydroxy-5'-methacryloyloxy(2"-octyloxycarbonyl)ethylphenyl)benzotriazol, 2-(3'-t-Butyl-2'-hydroxy-5'-methacryloyloxy(2"-octyloxycarbonyl)ethylphenyl)-5-chloro-benzotriazol, 2-(3'-t-Butyl-2-hydroxy-5'-methacryloyloxy-(2"-methoxycarbonyl)ethylphenyl)-5-chloro-benzotriazol, 2-[3'-t-Butyl-2'-hydroxy-5'-(2"-methoxycarbonylethyl)phenyl]benzotriazol, 5-Chloro-2-[2'-hydroxy-3'-α-cumyl-5'-(methacryloyloxy-t-octyl)phenyl]benzotriazol, 2-(2'-Hydroxy-4'-methacryloyloxy-octyloxyphenyl)benzotriazol, 2-[3'-t-Butyl-2'-hydroxy-5'-methacryloyloxy-(2"-isooctyloxycarbonyl-ethyl)phenyl]benzotriazol, 5-Chloro-2-(3'-t-butyl-5'-methacryloyloxy-t-butyl-2'-hydroxyphenyl)-benzotriazol, 5-Trifluoromethyl-2-[2'-hydroxy-3'-α-cumyl-5'-(methacryloyloxy-t-butyl)phenyl]-benzotriazol, 5-Phenylsulfonyl-2-[2'-hydroxy-3'-t-butyl-5'-(methacryloyloxy-t-butyl)phenyl]-benzotriazol, 5-Chloro-2-(2'-hydroxy-3'-α-cumyl-5'-(methacryloyloxy-α-cumyl)phenyl]benzotriazol, 5-Trifluoromethyl-2-[2'-hydroxy-3'-t-octyl-5'-(methacryloyloxy-t-octyl)phenyl]benzotriazol, 2-[3'-t-Butyl-2'-hydroxy-5'-methacryloyloxy-(2"-isooctyloxycarbonylethyl)phenyl]-5-chloro-benzotriazol, 5-Trifiuoromethyl-2-[2'-hydroxy-3'-α-cumyl-5'-(methacryloyloxy-t-octyl)phenyl]benzotriazol, 5-Trifluoromethyl-2-[2'-hydroxy-5'-(methacryloyloxy-t-octyl)phenyl]benzotriazol, 5-Butyl-sulfonyl-2-[2'-hydroxy-3'-t-butyl-5'-(methacryloyloxy-t-butyl)phenyl]benzotriazol und 2-[2'-Hydroxy-3'-α-cumyl-5'-(methacryloyloxy-t-octyl)phenyl]benzotriazol. Alternativ können auch jene soeben genannten Benzotriazole verwendet werden, bei denen die Methacryloyloxygruppe durch andere polymerisierbare Gruppen ersetzt wurde, wie z.B. durch Acrylamido-, Methacrylamido-, Acryloyloxy-, Allyl- und Vinyl-Gruppen.

Besonders bevorzugt werden Photoinitiatoren der Substanzklasse 2-Hydroxyphenyl-s-Triazin eingesetzt.

### Pigmente:

Für färbige Beschichtungen werden meist Pigmente als farbgebende Komponente eingesetzt. Grundsätzlich sind die im erfindungsgemäßen Beschichtungsmittel einsetzbaren Pigmente nicht limitiert und können aus der Vielfalt an vorhandenen Pigmenten frei ausgewählt werden. Bevorzugt werden jedoch solche Pigmente eingesetzt, die eine hohe Lichtechtheit aufweisen und deren Farbton eine hohe Reproduzierbarkeit aufweist.

Die in Folge angegebenen Beispiele organischer und anorganischer Pigmente können in den erfindungsgemäßen Beschichtungsmittel bzw. Tinten eingesetzt werden; diese stellen jedoch keine wie auch immer geartete Limitierung dar. Im Rahmen der Erfindung geeignete Pigmente können organischer wie anorganischer Natur sein. Geeignete anorganische Pigmente umfassen zum Beispiel Titandioxid und Ruß, während geeignete organische Pigmente beispielsweise die Klassen der Phthalocyanine, Anthrachinone, Perylene, Carbazole, Monoazo- und Bisazobenzimidazolone, Isoindolinone, Monoazonaphthole, Chinacridone, Diazopyranthrone, Pyrazolone und Pyranthrone umfassen.

Pigmente werden an Hand des Color-Index beschrieben. Im erfindungsgemäßen Beschichtungsmittel verwendbar sind beispielsweise:
Rot und Magenta Pigmente: Red 3, 5, 19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, oder 257, Pigment Violet 3, 19, 23, 29, 30, 37, 50, oder 88, oder Pigment Orange 13, 16, 20, oder 36, oder ähnliche,
Blaue und Cyan Pigmente: Blue 1, 15, 15:1, 15:2, 15:3,15:4, 15:6, 16, 17-1, 22, 27, 28, 29, 36, oder 60, oder ähnliche,
Grüne Pigmente: Green 7, 26, 36, oder 50, oder ähnliche,
Gelbe Pigmente: Yellow 1, 3, 12, 13, 14, 17, 34, 35, 37, 55, 74, 81, 83, 93, 94, 95, 97, 108, 109, 110, 137, 138, 139, 153, 154, 155, 157, 166, 167, 168, 180, 185, oder 193, oder ähnliche,
Schwarze Pigmente: Black 7, 28, oder 26, oder ähnliche, und
   Weiße Pigmente: 6, 18, oder 21, oder ähnliche.

Die Pigmente können in Abhängigkeit der jeweiligen Anwendung gewählt werden. Bevorzugt sind Pigmente, die eine Lichtechtheit von 7 oder höher auf der Blauwollskala aufweisen.

Die Pigmente werden üblicherweise über Vermahlen in ausgewählten reaktiven Monomeren und/oder Oligomeren in die Formulierungen zum erfindungsgemäßen Beschichtungsmittel eingebracht. Ein Zusatz von Dispergier- und Benetzungshilfen vermag oft die Vermahlleistung zu steigern und die durch den Mahlprozess de-agglomerierten Pigmente zu stabilisieren. Geeignete derartige Additive sind beispielsweise unter den Handelsbezeichnungen SOLSPERSE® (The Lubrizol Corporation), EFKA® (BASF), TEGO (Evonik) und BYK (Byk Chemie) erhältlich. Die Menge an zugesetzter Dispergierhilfe richtet sich nach der Art und Menge des verwendeten Pigmentes und beträgt bei organischen Pigmenten ca. 20 bis 100 Gewichts-%, bei anorganischen Pigmenten ca. 5 bis 80 Gewichts-%, jeweils bezogen auf die Menge des Pigmentes.

Jede kommerziell angebotene Dispergiermaschine, wie beispielsweise Kugel- bzw. Perlmühlen, ein Henschel-Mischer, eine Kolloid-Mühle, ein Ultraschall-Homogenisat oder ein Farbrüttler können verwendet werden, um das gewählte Pigment in der flüssigen Matrix zu dispergieren bzw. zu vermahlen, für feste/geschmolzene Matrix kann ein Extruder verwendet werden.

Zusätzlich können im erfindungsgemäßen Beschichtungsmittel weitere Komponenten eingesetzt werden: Alternativ kann das Pigment beispielsweise in einem Lösungsmittel dispergiert werden. Bevorzugt wird aber auf den Einsatz von Lösungsmitteln verzichtet.

Prinzipiell können in den erfindungsgemäßen Beschichtungsmitteln ein oder mehrere unterschiedliche Pigmente eingesetzt werden.

Um hohe Farbstärke, gute Sedimentationsstabilität, Newton'sches Viskositätsverhalten, gute Filtrierbarkeit und gute Polymerisationseigenschaften bei den Ausführungen des erfindungsgemäßen Beschichtungsmittels als Tinte zu gewährleisten, soll der Partikeldurchmesser der Pigmente zwischen 0,005 und 0,5 µm liegen. Der mittlere Durchmesser liegt bevorzugt zwischen 0,01 und 0,35 µm, und weiter bevorzugt zwischen 0,015 und 0,3 µm.

Der bevorzugte Pigmentgehalt in erfindungsgemäßen Tinten liegt in Abhängigkeit der gewünschten Eigenschaften zwischen 0,5 Gewichts-% und 10 Gewichts-%, bevorzugter zwischen 1 und 8 Gewichts-%, bezogen auf das Gesamtgewicht der jeweiligen Formulierung.

Wenn die Zusammensetzung der erfindungsgemäßen Tinte einer weißen Tinte entspricht, wird ein weißes Pigment wie beispielsweise Titanoxid eingesetzt, bevorzugt mit einem Anteil von 5 bis 30 Gewichts-% und bevorzugter mit einem Anteil von 10 bis 25 Gewichts-% bezogen auf das Gesamtgewicht der jeweiligen Formulierung.

Die erfindungsgemäße Beschichtung, insbesondere in Form einer Tinte, kann weitere Bestandteile enthalten, um beispielsweise die thermische Stabilität, die Druckbarkeit, oder andere physikalische und chemische Eigenschaften zu verbessern. Einige zusätzliche Additive werden in weiterer Folge beschrieben.

### Zusätzliche Additive

Das beschriebene, erfindungsgemäße Beschichtungsmittel kann zusätzlich zu den zuvor genannten noch weitere Komponenten enthalten. Beispiele hierfür sind PolymerisierungsInhibitoren und Lösungsmittel.

Polymerisierungsinhibitoren werden ggf. beigefügt um die Lagerstabilität des erfindungsgemäßen Beschichtungsmittels zu verbessern. Wird das erfindungsgemäße Beschichtungsmittel als Ink-jet-Tinte angewendet, so wird diese vor ihrer Verwendung bevorzugt auf 40-80 °C erhitzt, um die Viskosität zu senken. Hier können zugesetzte Polymerisationsinhibitoren eine unerwünschte Vorpolymerisation verhindern/verringern und so ein Verstopfen des Druckkopfs vermeiden. Der eingesetzte Konzentrationsbereich dieser Inhibitoren kann sehr breit sein und liegt typischerweise zwischen 150 bis 25000 ppm, bezogen auf die Gesamttintenzusammensetzung. Beispiele für solche Verbindungen sind TEMPO, TEMPOL, cupferron A1, Chinone (Hydrochinon, 1,4-Benzochinon, 1,2- Benzochinon) und p-Metoxyphenol.

Üblicherweise werden bei strahlungshärtbaren Beschichtungen keine reinen Lösungsmittel (d.h. keine Komponenten, welche nicht polymerisieren können) eingesetzt, um die Vernetzung/Aushärtung nicht zu beeinträchtigen. Jedoch können auch beim erfindungsgemäßen Beschichtungsmittel Lösungsmittel zugesetzt werden, welche die Vernetzung nicht negativ beeinflussen. Diese Lösungsmittel können organische Lösemittel oder Wasser sein. Speziell können organische Lösemittel zugefügt werden, um die Anhaftung der Beschichtung auf das zu bedruckende Substrat (z.B. Papier) zu verbessern. Mögliche Konzentrationsbereiche für die Lösemittel liegen bei 0,1 - 5 Gewichts-% bezogen auf die Gesamtbeschichtungszusammensetzung. Beispiele für mögliche organische Lösemittel sind Propylencarbonat, Dimethylsuccinat, Dimethylglutarat, Dimethyladipat oder Mischungen daraus.

Natürlich kann das erfindungsgemäße Beschichtungsmittel noch andere, in Beschichtungen dem Stand der Technik entsprechend bekannte, Komponenten beinhalten. Exemplarisch kann hier der Zusatz von Verlaufsadditiven, oberflächenaktiven Komponenten, Mattierungsmittel oder der Einsatz von Harzen/Wachsen (z.B. Polyesterharze, Vinylharze, Acrylharze, Polyurethanharze, Teflonharze) zur Einstellung der physikalischen Eigenschaften wie z.B. der Viskosität aber auch der Stabilität gegenüber UV-Strahlung genannt werden.

Ein anderes mögliches Additiv sind sogenannte Klebrigmacher (Haftungsvermittler zum zu beschichtenden Substrat). Diese dürfen die Polymerisation nicht unterbinden und können beispielsweise Polyolefine oder PETs sein. Einige Beispiele geeigneter hochmolekularer Verbindungen sind in JP 200149200 genannt, darüber hinaus sind auch noch niedermolekulare Harze mit polymerisierbaren ungesättigten Verbindungen geeignet.

### Tinteneigenschaften:

Das erfindungsgemäße Beschichtungsmittel ist nicht auf spezifische physikalische Eigenschaften eingeschränkt. So kann, wie bereits erwähnt, die Beschichtung in Form eines Pulverlacks oder eines Flüssiglacks ausgeführt sein. Eine bevorzugte Ausführung ist in Form einer Tinte, insbesondere einer Ink-Jet Tinte. Die Viskosität der erfindungsgemäßen Tinten liegt bei Verarbeitungstemperatur - üblicherweise ca. 15 bis 60°C - vorzugsweise im Bereich von 2 bis 20 mPa·s, besonders bevorzugt im Bereich von 6 bis 12 mPa·s. Höhere Viskositäten können hierbei dazu beitragen, dass die Tinte nicht in zu beschichtende Substrate, insbesondere in poröse Substrate, eindringen kann. Zusätzlich kann der Anteil von ausgehärteten Monomeren und der Geruch reduziert werden. Darüber hinaus wird das sogenannte Ausbluten der aufgedruckten Tintentropfen unterdrückt, was zu einer verbesserten Bildqualität führt.

Die Oberflächenspannung einer erfindungsgemäßen Tintenzusammensetzung ist bevorzugt im Bereich von 20 bis 35 mN/m, bevorzugt bei 22 bis 28 mN/m, jeweils bei Raumtemperatur. Besteht das zu beschichtende Substrat aus unbeschichtetem Papier, beschichtetem Papier, Polyolefin oder PET, so beträgt meist die Oberflächenspannung 20 mN/m oder mehr, um Ausbluten und Eindringen zu verhindern, oder 30 mN/m oder weniger für entsprechende Benetzbarkeit (gemessen jeweils bei Raumtemperatur).

### Herstellung einer Tinte als bevorzugtes Beschichtungsmittel

Die erfindungsgemäßen Formulierungen werden durch Zusammenbringen der betreffenden Komponenten hergestellt, durch Mischen, Rühren, Vermahlen, Extrudieren und sonstige Methoden, die geeignet sind, homogene Zusammensetzungen hervorzubringen.

### Härtung einer erfindungsgemäßen Beschichtung

Die erfindungsgemäße Beschichtung wird bevorzugt mit einer Lichtquelle mit einem Emissionspeak von > 350 nm durch Polymerisation gehärtet. Diese Lichtquelle kann beispielsweise eine HG-UV-Lampe mit entsprechenden Filtern sein, welche ihren Emissionspeak bei >350 nm, bevorzugt >390 nm aufweist. Bevorzugte Lichtquelle ist eine UV-LED-Lampe (Licht emittierende Diode) oder UV-LD-Lampe (Laserdiode), welche den Emissionspeak bei >360 nm, bevorzugt >390 nm hat.
LEDs haben kleine Größen, lange Lebenszeit, hohe Effizienz und attraktive Kosten. Diese Systeme sind kommerziell erhältlich. Auch die Kombination von Lichtquellen mit unterschiedlichen Emissionsspektren ist möglich. Bevorzugt werden zur Härtung des erfindungsgemäßen Beschichtungsmittels LEDs mit einer maximalen Lichtintensität auf dem zu beschichteten Substrat mit 10 bis 2000 mW/cm², besonders bevorzugt mit 50 bis 900 mW/cm² eingesetzt. Die Aushärtung geschieht üblicherweise durch Bestrahlung über einen Zeitraum von 0,01 bis 150 Sekunden, bevorzugt 0,1 bis 100 Sekunden. Mögliche - aber nicht ausschließliche - Bedingungen und Methoden zur Härtung eines erfindungsgemäßen Beschichtungsmittels in Form einer Tinte sind in JP 60132767 dargelegt. In vielen Fällen ist hierbei die Strahlungsquelle gemeinsam mit dem Tintenstrahlelement am Druckkopfelement angebracht. Die Strahlung wird hierbei nach einer vordefinierten Zeit (z.B. 0,01 bis 0,5 Sekunden) nach dem Auftragen des Beschichtungsmittels emittiert. Zur Verringerung des sogenannten Ausblutens wird diese Zeit meist kurz gewählt. Dadurch kann z.B. auch die Penetration in ein poröses Medium minimiert werden, was wiederum wichtig ist, da die emittierte Strahlung nur bedingt in einen porösen Körper vordringen kann. Dadurch wird die Menge an nicht reagiertem Monomer sowie der Geruch verringert.

### Übersicht der Abbildungen:

- Abbildung 1: Darstellung des Emissionsspektrums einer Quecksilber-basierten UV-Lampe und des Absorptionsbereichs von Tinuvin 400.
- Abbildung 2: Vergleich der Emissionspektren einer Quecksilber UV-Lampe und einer UV-LED-Lampe und Darstellung des Absorptionsbereichs von Tinuvin 400.
- Abbildung 3: Exemplarische Absorptionskurven möglicher UV-Absorber (die Graphik wurde der Broschüre "Coatings that stay looking good - BASF performance additives" der BASF SE entnommen).

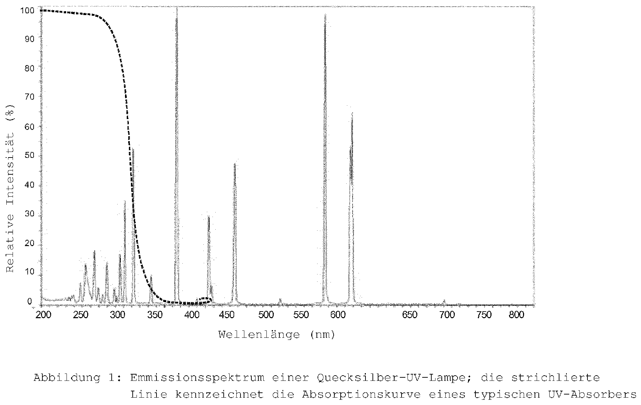

Abbildung 1: In Abbildung 1 ist ein Emissionsspektrum einer Quecksilber-UV-Lampe dargestellt (schwarze durchgezogene Linie). Wie erkennbar ist, treten bei dieser Lichtquelle mehrere Emissionspeaks auf, wobei der Großteil der Peaks unterhalb von 400 nm liegt. Die schwarz gestrichelte Linie zeigt das Absorptionsspektrum eines möglichen UV-Absorbers. Wie erkennbar überlagert das Absorptionsspektrum großteils die von der Quecksilber-Lampe emittierte Strahlung, dadurch kann für die Härtung der Beschichtung nicht optimal UV-Strahlung zur Verfügung gestellt werden. Eine ungenügend gehärtete Schicht ist die Folge bzw. alternativ bei sich verbrauchenden Absorbern liegt bei entsprechend langer Einstrahlung und Aushärtung eine ungenügende UV-Absorber-Konzentration in der Beschichtung vor, wodurch eine schlechte Außenbeständigkeit gegeben ist.

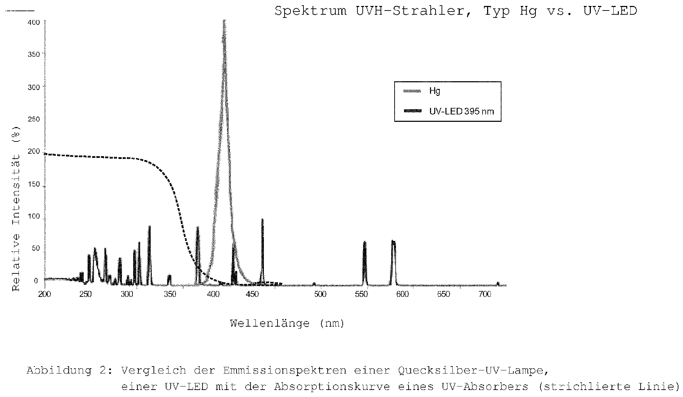

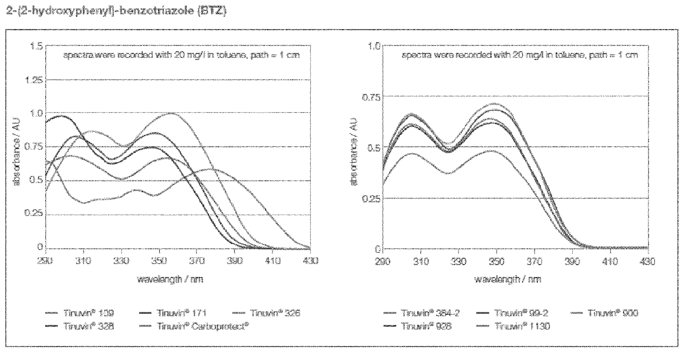

Abbildung 2: In Abbildung zwei werden der Emissionsbereich einer Standard-Quecksilber-UV-Lampe, einer UV-LED und der Absorptionsbereich eines möglichen UV-Absorbers verglichen. In einer bevorzugten Ausführung der Erfindung werden UV-Absorber und UV-LED-Lampen eingesetzt, bei denen keine oder nur eine vernachlässigbare Überlappung des Absorptions- bzw. Emissionsspektrum gegeben ist. Wie aus Abbildung 2 hervorgeht, liegt die emittierte Leistung einer UV-LED ca. 4-mal höher als jener eines Quecksilber-Strahlers. Weiters absorbiert der dargestellte UV-Absorber im Wellenlängenbereich um 395 nm nur mehr schwach, was sich in einer hohen Transparenz des UV-Absorbers für die von der UV-LED zur Verfügung gestellten UV-Strahlung äußert. In Summe führt dies zu einer guten Aushärtung der Beschichtung bei gleichzeitig noch in ausreichender Konzentration vorhandenen UV-Absorbern zur Bereitstellung von entsprechend hohem UV-Schutz für die Außenstabilität.

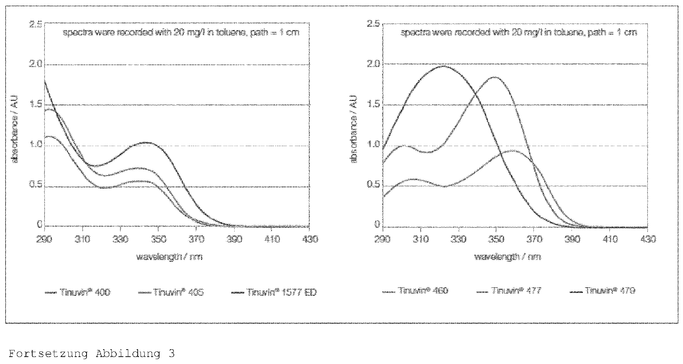

Abbildung 3 zeigt exemplarische Absorptionskurven möglicher UV-Absorber, die Graphik wurde der Broschüre "Coatings that stay looking good - BASF performance additives" der BASF SE entnommen.

Nachfolgend sind exemplarische Ausführungsbeispiele der offenbarten Erfindung dargelegt. Diese Beispiele dienen nur zur Illustration ohne den Umfang der Erfindung auf diese Beispiele einzuschränken.

### Beispiele außenbeständiger Tinten

| Komponente | Standardformulierung | Bsp.1 | Bsp.2 | Bsp.3 | Bsp.4 | Bsp.5 | Bsp.6 | Bsp.7 | Bsp.8 | Bsp.9 | Bsp.10 | Bsp.11 | Bsp.12 |
|---|---|---|---|---|---|---|---|---|---|---|---|---|---|
| CN152* | 1 | 1 | | | 1 | 1 | | | | | | | |
| CN386* | 3 | 3 | | | 3 | 3 | | | | | | | |
| CN704* | 2 | 2 | | | 2 | 2 | | | | | | | |
| Dow Corning 57 | 0,2 | 0,2 | 0,2 | 0,2 | 0,2 | 0,2 | 0,2 | 0,2 | 0,2 | 0,2 | 0,2 | 0,2 | 0,2 |
| SR9003* | 3,5 | 3,5 | | | 3,5 | 3,5 | | | | | | | |
| SR833S* | 1,2 | 1,5 | | | 1,2 | 1,5 | | | | | | | |
| SR339C* | 43,35 | 40,75 | | | 43,35 | 40,75 | | | | | | | |
| CN820* | 2,2 | 1 | | | 2,2 | 1 | | | | | | | |
| SR217* | 4 | 4 | | | 4 | 4 | | | | | | | |
| SR9051* | 0,7 | 0,7 | 0,8 | 0,4 | 0,7 | 0,7 | 0,4 | 0,4 | 0,4 | 0,4 | 0,4 | 0,4 | 0,4 |
| Tego Disperse 685 | 0,2 | 0,2 | | | 0,2 | 0,2 | | | | | | | |
| N-Vinyl-caprolactam | 18 | 18 | | | 18 | 18 | | | | | | | |
| WAKO Q1301 | 0,05 | 0,05 | 0,05 | 0,05 | 0,05 | 0,05 | 0,05 | 0,05 | 0,05 | 0,05 | 0,05 | 0,05 | 0,05 |
| Irgacure TPO | 0,5 | 0,5 | | 2 | 0,5 | 0,5 | 2 | 2 | 2 | 2 | 2 | 2 | 2 |
| Speedure ITX | 2,5 | 2,5 | 2,5 | 2,5 | 2,5 | 2,5 | 2,5 | 2,5 | 2,5 | 2,5 | 2,5 | 2,5 | 2,5 |
| Irgacure 819 | 4 | 4 | 4 | 2 | 4 | 4 | 2 | 2 | 2 | 2 | 2 | 2 | 2 |
| Mahlpaste gelb 1 | 10,5 | 9 | 9 | | 10,5 | 9 | | | | | | | |
| Mahlpaste gelb 2 | | | | 9 | | | 9 | 9 | 9 | 9 | 9 | 9 | 9 |
| Tinuvin 400 | | 5 | 5 | 5 | | 5 | 10 | 15 | 20 | | | | |
| SR531* | | | 60,35 | 58,75 | | | 53,75 | 48,75 | 43,75 | 43,75 | 38,75 | 43,75 | 38,75 |
| SR506* | | | 12 | 12 | | | 12 | 12 | 12 | 12 | 12 | 12 | 12 |
| SR238* | | | 3 | 5 | | | 5 | 5 | 5 | 5 | 5 | 5 | 5 |
| RUVA-93 | | | | | | | | | | 20 | 25 | | |
| oMTP | | | | | | | | | | | | 20 | 25 |
| HÄRTUNG | UV-LED | UV-LED | UV-LED | UV-LED | Hg-Lampe | Hg-Lampe | UV-LED | UV-LED | UV-LED | UV-LED | UV-LED | UV-LED | UV-LED |

| | | | | | | | | | | | | | |
|---|---|---|---|---|---|---|---|---|---|---|---|---|---|
| Mahlpaste gelb1: 21 % Cromophtal Yellow D108, 7 % Tego Disperse 685, 72 % SR531* Mahlpaste gelb 2: SPECTRA RAY IJ YELLOW 150 UV Dispersion *: Sartomer Produkt-Code | | | | | | | | | | | | | |

| Komponente | Chemische Beschreibung | Hersteller |
|---|---|---|
| CN152* | Aliphatisches Epoxy Acrylat | Sartomer-Arkema |
| CN386* | Acrylierter Amin-Synergist | Sartomer-Arkema |
| CN704* | Polyester Acrylat | Sartomer-Arkema |
| Dow Corning 57 | Silikon | Dow Chemical |
| SR9003* | Propoxiliertes (2) Neopentylglykol Diacrylat | Sartomer-Arkema |
| SR833S* | Tricyclodecandimethanol Diacrylat | Sartomer-Arkema |
| SR339C* | 2-Phenoxyethylacrylat | Sartomer-Arkema |
| CN820* | Acryliertes Acrylat | Sartomer-Arkema |
| SR217* | Tertiobutyl-Cyclohexyl Acrylat | Sartomer-Arkema |
| SR9051* | Säurebasiertes Haftungsadditiv | Sartomer-Arkema |
| Tego Disperse 685 | Hochmolekulares Polymer | Evonik |
| WAKO Q1301 | Aluminiumsalz von N-Nitrosophenylhydroxylamin | WAKO Chemicals |
| Irgacure TPO | 2, 4, 6-Trimethylbenzoyldiphenylphosphinoxid | BASF |
| Speedure ITX | CAS Nummer 5495-84-1 (2-isomer) & 83846-86-0 | Lambson |
| Irgacure 819 | Phenylbis(2,4,6-trimethylbenzoyl)-phosphinoxid | BASF |
| Tinuvin 400 | 2-Hydroxyphenyl-s-Triazin | BASF |
| SR531* | Cyclisches Trimethylolpropanformal Acrylat | Sartomer-Arkema |
| SR506D* | Isobornyl Acrylat | Sartomer-Arkema |
| SR238* | 1,6-Hexandiol Diacrylat | Sartomer-Arkema |
| RUVA-93 | CAS Nr.: 96478-09-0 | Otsuka Chemical Co. Ltd |
| oMTP | o-Methylallyl Tinuvin P | Polyscience |
| Cromophtal Yellow D108 | Gelbpigment | BASF |
| SPECTRA RAY IJ YELLOW 150 UV Dispersion | Pigmentdispersion | SunChemical |

| | **ΔE QUVA-Tests** | | **ΔE QUVB-Tests** | | |
|---|---|---|---|---|---|
| **Tinte** | **1000 h** | **2000 h** | **300 h** | **600 h** | **900 h** |
| Standardformulierung | 3,02 | 6,89 | 4,14 | 6,57 | 8,17 |
| Beispiel 1 | 1,54 | 3,89 | 2,65 | 3,89 | 5,65 |
| Beispiel 2 | 1,44 | 3,54 | 2,35 | 3,54 | 5,05 |
| Beispiel 3 | 1,12 | 2,92 | 0,73 | 2,76 | 3,52 |
| Beispiel 4 | 3,05 | 7,05 | 4,20 | 6,75 | 8,05 |
| Beispiel 5 | 2,75 | 6,38 | 3,76 | 5,95 | 7,67 |
| Beispiel 6 | 1,02 | 2,52 | 0,52 | 2,12 | 2,85 |
| Beispiel 7 | 0,56 | 1,12 | 0,45 | 1,12 | 1,96 |
| Beispiel 8 | 0,48 | 1,09 | 0,48 | 0,93 | 2,05 |
| Beispiel 9 | 0,32 | 0,81 | 0,35 | 0,64 | 1,56 |
| Beispiel 10 | 0,31 | 0,79 | 0,41 | 0,55 | 1,20 |
| Beispiel 11 | 0,42 | 0,95 | 0,25 | 0,49 | 1,32 |
| Beispiel 12 | 0,31 | 0,80 | 0,30 | 0,55 | 1,03 |

Die in der obenstehenden Tabelle an erster Stelle genannte Standardformulierung entspricht nicht dem Gegenstand der vorliegenden Erfindung, sie enthält keine UV-Absorber. Nachstehend wird unter Bezugnahme auf die einzelnen Beispiele ausgeführt, welche Änderungen gegenüber der Standardformulierung vorgenommen wurden:
Beispiel 1: UV-Absorber wurde zugegeben,
Beispiel 2: Acrylat-Matrix wurde adaptiert,
Beispiel 3: Pigment wurde getauscht,
Beispiel 4: Standardformulierung wurde mit Hg-Lampe gehärtet,
Beispiel 5 : Formulierung aus Beispiel 1 wurde mit Hg-Lampe gehärtet,
Beispiel 6: 10% UV-Absorber,
Beispiel 7: 15 % UV-Absorber,
Beispiel 8: 20 % UV-Absorber,
Beispiel 9: 20 % radikalisch polymerisierbarer UV-Absorber.
Beispiel 10: 25 % radikalisch polymerisierbarer UV-Absorber.
Beispiel 11: 20 % radikalisch polymerisierbarer UV-Absorber.
Beispiel 12: 25 % radikalisch polymerisierbarer UV-Absorber.

## Patentansprüche

1. Strahlungshärtbares Beschichtungsmittel, das polymerisierbare, ungesättigte Verbindungen wie (Methyl)Acrylate, Vinylverbindungen oder dgl. enthält in einem Konzentrationsbereich von 15-98 Gewichts-%, mit einen Zusatz von 5-35 Gewichts-%, bevorzugt 5-20 Gewichts-%, organischer UV-Absorber, **dadurch gekennzeichnet, dass** der bzw. die UV-Absorber in einem Wellenlängenbereich von <390 nm, bevorzugt <350 nm, ihren maximalen Absorptionsgrad aufweisen, wobei das Beschichtungsmittel optional weitere Komponenten in einer Menge des Restes auf 100 Gewichts-% enthält.

2. Strahlungshärtbares Beschichtungsmittel, das polymerisierbare, ungesättigte Verbindungen wie (Methyl)Acrylate, Vinylverbindungen oder dgl. enthält in einem Konzentrationsbereich von 15-98 Gewichts-%, mit einem Zusatz von 5-35 Gewichts-%, bevorzugt 5-20 Gewichts-%, organischer UV-Absorber, wobei der bzw. die UV-Absorber in einem Wellenlängenbereich von <390 nm, bevorzugt <350 nm, ihren maximalen Absorptionsgrad aufweisen und das Beschichtungsmittel optional weitere Komponenten in einer Menge des Restes auf 100 Gewichts-% enthält, **dadurch gekennzeichnet, dass** mindestens ein organischer UV-Absorber radikalisch polymerisierbar ist/sind.

3. Beschichtungsmittel nach Anspruch 1 oder 2, **dadurch gekennzeichnet, dass** es weiters Photoinitator(en) und/oder Photosensitizer Füller, Pigmente, Additive und anderen UV-Absorber in einem Gesamtkonzentrationsbereich von 0-80 Gewichts-% enthält.

4. Beschichtungsmittel nach einem der Ansprüche 1 bis 3, **dadurch gekennzeichnet, dass** der bzw. Photosensitizer und/oder Photoinitiatoren im Bereich von kleiner 420 nm und bevorzugt größer 350 nm ihr Absorptionsmaximum haben.

5. Beschichtungsmittel nach einem der Ansprüche 1 bis 4, **dadurch gekennzeichnet, dass** der Anteil an monofunktionellen polymerisierbaren Komponenten mindestens 50 Gewichts-%, bevorzugt mindestens 75 Gewichts-% aller polymerisierbaren Komponenten beträgt.

6. Beschichtungsmittel nach einem der Ansprüche 1 bis 4, **dadurch gekennzeichnet, dass** der Anteil an monofunktionellen polymerisierbaren Komponenten höchstens 25 Gewichts-%, aller polymerisierbaren Komponenten beträgt.

7. Beschichtungsmittel nach einem der Ansprüche 1 bis 4, **dadurch gekennzeichnet, dass** der Anteil an monofunktionellen polymerisierbaren Komponenten mindestens 75 Gewichts-%, aller polymerisierbaren Komponenten beträgt.

8. Beschichtungsmittel nach einem der Ansprüche 1 bis 7, **dadurch gekennzeichnet, dass** es eine Tinte, bevorzugt eine Ink-Jet-Tinte ist.

9. Verfahren zur Härtung eines Beschichtungsmittels nach einem der Ansprüche 1 bis 7 zu einer Beschichtung, **dadurch gekennzeichnet, dass** die Härtung durch den Einsatz einer Lichtquelle mit einem Emissionspeak von >350 nm vollzogen wird.

10. Verfahren nach Anspruch 9, **dadurch gekennzeichnet, dass** die Lichtquelle eine UV-LED-Lampe oder UV-LD-Lampe ist, welche einen Emissionspeak bei >360 nm, bevorzugt >390 nm, aufweist.

11. Beschichtung, erhältlich durch ein Verfahren nach einem der Ansprüche 9 oder 10.

## Claims

1. Radiation-curable coating agent which contains polymerisable, unsaturated compounds such as (methyl)acrylate, vinyl compounds or the like in a concentration range of 15-98 wt.% together with an addition of 5-35 wt.%, preferably 5-20 wt.%, of organic UV absorbers, **characterised in that** the maximum absorptance of the UV absorber(s) is in a wavelength range of < 390 nm, preferably < 350 nm, the coating agent optionally containing further components in an amount comprising the remainder up to 100 wt.%.

2. Radiation-curable coating agent which contains polymerisable, unsaturated compounds such as (methyl)acrylate, vinyl compounds or the like in a concentration range of 15-98 wt.% together with an addition of 5-35 wt.%, preferably 5-20 wt.%, of organic UV absorbers, the maximum absorptance of the UV absorber(s) being in a wavelength range of < 390 nm, preferably < 350 nm, and the coating agent optionally containing further components in an amount comprising the remainder up to 100 wt.%, **characterised in that** at least one organic UV absorber is radically polymerisable.

3. Coating agent according to either claim 1 or claim 2, **characterised in that** it further contains photoinitiator(s) and/or photosensitisers, fillers, pigments, additives and other UV absorbers in a total concentration range of 0-80 wt.%.

4. Coating agent according to any of claims 1 to 3, **characterised in that** the absorption maximum of the photosensitiser(s) and/or photoinitiator(s) is in the range of less than 420 nm and preferably greater than 350 nm.

5. Coating agent according to any of claims 1 to 4, **characterised in that** the proportion of monofunctional polymerisable components is at least 50 wt.%, preferably at least 75 wt.%, of all the polymerisable components.

6. Coating agent according to any of claims 1 to 4, **characterised in that** the proportion of monofunctional polymerisable components is at most 25 wt.% of all the polymerisable components.

7. Coating agent according to any of claims 1 to 4, **characterised in that** the proportion of monofunctional polymerisable components is at least 75 wt.% of all the polymerisable components.

8. Coating agent according to any of claims 1 to 7, **characterised in that** it is an ink, preferably an inkjet ink.

9. Method for curing a coating agent according to any of claims 1 to 7 to form a coating, **characterised in that** the curing is carried out by using a light source having an emission peak of > 350 nm.

10. Method according to claim 9, **characterised in that** the light source is a UV-LED lamp or UV-LD lamp which has an emission peak of > 360 nm, preferably > 390 nm.

11. Coating which can be obtained by a method according to either claim 9 or claim 10.

## Revendications

1. Agent de revêtement pouvant être durci par rayonnement qui contient des composés insaturés polymérisables comme des (méthyl)acrylates, des composés vinyliques ou analogues dans un domaine de concentration de 15-98 % en poids, avec une addition de 5-35 % en poids, de préférence de 5-20 % en poids, d'absorbeurs d'UV organiques, **caractérisé en ce que** le ou les absorbeurs d'UV présentent leur degré d'absorption maximal dans un domaine de longueurs d'onde < 390 nm, de préférence < 350 nm, où l'agent de revêtement contient éventuellement d'autres composants en une quantité du reste pour 100 % en poids.

2. Agent de revêtement pouvant être durci par rayonnement qui contient des composés insaturés polymérisables comme des (méthyl)acrylates, des composés vinyliques ou analogues dans un domaine de concentration de 15-98 % en poids, avec une addition de 5-35 % en poids, de préférence de 5-20 % en poids, d'absorbeurs d'UV organiques, où le ou les absorbeurs d'UV présentent leur degré d'absorption maximal dans un domaine de longueurs d'onde < 390 nm, de préférence < 350 nm et l'agent de revêtement contient éventuellement d'autres composants en une quantité du reste pour 100 % en poids, **caractérisé en ce qu'**au moins un absorbeur d'UV organique est polymérisable par polymérisation radicalaire.

3. Agent de revêtement selon la revendication 1 ou 2, **caractérisé en ce qu'**il contient en outre un ou des photoinitiateurs et/ou photosensibilisateurs, charges, pigments, additifs et d'autres absorbeurs d'UV dans un domaine de concentration totale de 0-80 % en poids.

4. Agent de revêtement selon l'une des revendications 1 à 3, **caractérisé en ce que** le ou les photosensibilisateurs et/ou photoinitiateurs ont leur maximum d'absorption dans le domaine de moins de 420 nm et de préférence de plus de 350 nm.

5. Agent de revêtement selon l'une des revendications 1 à 4, **caractérisé en ce que** la fraction de composants polymérisables monofonctionnels est d'au moins 50 % en poids, de préférence d'au moins 75 % en poids de tous les composants polymérisables.

6. Agent de revêtement selon l'une des revendications 1 à 4, **caractérisé en ce que** la fraction de composants polymérisables monofonctionnels est d'au plus 25 % en poids de tous les composants polymérisables.

7. Agent de revêtement selon l'une des revendications 1 à 4, **caractérisé en ce que** la fraction de composants polymérisables monofonctionnels est d'au moins 75 % en poids de tous les composants polymérisables.

8. Agent de revêtement selon l'une des revendications 1 à 7, **caractérisé en ce que** c'est une encre, de préférence une encre pour jet d'encre.

9. Procédé pour durcir un agent de revêtement selon l'une des revendications 1 à 7 en un revêtement, **caractérisé en ce que** le durcissement est accompli par l'utilisation d'une source de lumière ayant un pic d'émission > 350 nm.

10. Procédé selon la revendication 9, **caractérisé en ce que** la source de lumière est une lampe UV-LED ou une lampe UV-LD qui présente un pic d'émission à > 360 nm, de préférence > 390 nm.

11. Revêtement pouvant être obtenu par un procédé selon l'une des revendications 9 ou 10.
